# EUROPÄISCHE PATENTANMELDUNG

(11) **EP 0 828 040 A2**
(43) Veröffentlichungstag der Anmeldung: **11.03.1998**
(21) Anmeldenummer: 97114868.9
(22) Anmeldetag: 27.08.1997
(51) Int. Cl.: E04F 17/02, F16L 59/02

(54) **Schornsteindämmanschette**

(30) Priorität: 09.09.1996 DE 29615684 U
(71) Anmelder: Grünzweig + Hartmann AG, D-67059 Ludwigshafen (DE)
(72) Erfinder: Kummermehr, Hans, 67059 Ludwigshafen (DE); Ablrecht, Volker, 67360 Lingenfeld (DE); Bihy, Lothar, 67657 Kaiserslautern (DE); Hoffmann, Heinz, 67134 Birkenheide (DE)
(74) Vertreter: Herrmann-Trentepohl, Werner, Dipl.-Ing.

(57) **Zusammenfassung**

Bei einer Dämmanschette aus Mineralwolle, insbesondere zur Umhüllung von in Schornsteinmantelsteine einsetzbare Schornsteininnenrohre (1), Heißdampfleitungen und ähnlichem, bestehend aus einer Dämmstoffschicht und einer diese umgebenden Mantelschicht, wobei die Kombination aus Dämmstoffschicht und Mantelschicht zumindest eine Schnittstelle (3) mit Stoßkante aufweist, ist die Schnittstelle durch ein die Dämmanschette an ihren beiden Stoßkanten verbindendes Klebeband (5) verschlossen, das einen duroplastisch reagierenden Kleber aufweist.

## Beschreibung

Die vorliegende Erfindung bezieht sich auf Schornsteindämmanschetten, wie im Oberbegriff des Anspruches 1 beschrieben.

Bei dem Aufbau von z.B. dreischaligen Schornsteinen, wie sie heutzutage weite Verbreitung finden, ist es eine bekannte Vorgehensweise, in vorgefertigte Schornsteinummantelungen Schornsteininnenrohrelemente bestehend aus einem Innenrohr sowie einer auf dieses aufgebrachten Isolationsschicht einzusetzen.

Ein derartiges Element ist beispielsweise aus dem Dokument DE 37 31 550 C1 bekannt, wo beschrieben ist, daß das vorgefertigte Schornsteininnenrohrelement, das mit Spielraum in eine vorgefertigte Schornsteinummantelung einsetzbar ist, und aus einem Innenrohr, einer auf der Außenfläche des Innenrohres angebrachten Wärmedämmschicht und aus einer die Wärmedämmschicht umgebenden und die Wärmedämmschicht zusammengedrückt haltenden Materialbahn besteht. Die Materialbahn ist dabei um das Innenrohr gewickelt und an der Schnittstelle auf geeignete Weise miteinander verbunden.

Aus dem Dokument DE-OS 28 38 943 ist darüberhinaus eine Umhüllung zur Isolierung von Rohren offenbart, die aus Streifen aus faserförmigem mineralischem Material gebildet ist, die an einer flexiblen Trägerschicht befestigt sind, wobei die Schichten der flexiblen Trägerschichten, welche an der Außenseite eines Isolationsrohres überlagert sind, miteinander verbunden sind.

Die bei dem vorgenannten Stand der Technik verwendete Verbindung im Stoßbereich der Dämmanschette ist mit einem konstruktiven und montagebedingten Aufwand verbunden und somit nachteilhaft.

Das besondere Problem bei Dämmanschetten besteht darin, daß die die Wärmedämmschicht umgebenden Materialbahnen oder Trägerschichten bei einem Einsatz auf Kaminrohren, Heißdampfleitungen oder ähnlichem an den Stellen, wo die Materialbahnen oder Trägerschichten eine Nahtstelle aufweisen, die die Gefahr in sich birgt, durch Temperatur- und Feuchtigkeitseinwirkungen aufzugehen. Wenn sich die Nahtstellen der Trägerschichten bzw. Materialbahnen um die Wärmeisolationsschichten aber lösen, kann auch die einwandfreie Funktion der Isolationselemente nicht mehr gewährleistet werden.

Die Aufgabe der vorliegenden Erfindung ist es daher, eine in Konstruktion und Montage einfache und im Verbindungsbereich dauerhafte Schornsteindämmanschette vorzusehen, deren stoßseitige Verbindung unempfindlich gegenüber Temperatur und Feuchtigkeitseinwirkungen z.B. bei der Verwendung auf Kaminrohren und Heißdampfleitungen ist.

Diese Aufgabe wird durch die kennzeichnenden Merkamle des Schutzanspruches 1 gelöst, wobei zweckmäßige Ausführungsformen durch die Unteransprüche beschrieben sind.

Vorgesehen ist eine Schornsteindämmanschette, bestehend aus einem Dämmelement aus Mineralwolle in Form einer Spurplatte, einer Lamellenplatte oder einem äquivalentem Mineralwolleelement, auf welches eine Materialbahn, beispielsweise ein Glasvlies oder etwas ähnliches aufkaschiert ist. Diese Schornsteindämmanschette ist vorzugsweise als rohrschalenartiges Element ausgeführt, welches nur einen Schnitt im Umfang aufweist, so daß es auf ein Schornsteininnenrohr, ein Heißdampfrohr oder etwas ähnliches aufgesetzt werden kann.

Die Schnittstelle in der Schornsteindämmanschette bildet dabei einen Stoßbereich, der nach Maßgabe der Erfindung vorzugsweise über die gesamte Länge des Schnittes durch ein Klebeband aus Glasgewebe, Alufolie oder dergleichen verschlossen ist. Vorzugsweise ist dieses Klebeband auf die auf das Dämmelement aufkaschierte Materialbahn über die gesamte Länge des Stoßbereiches der Schornsteindämmanschette aufgebügelt, wobei zur Befestigung des Klebebandes vorzugsweise ein punktförmig aufgebrachter Kleber verwendet ist. Damit wird eine praktisch unlösbare Verbindung erreicht.

Als Kleber kommt dabei vorzugsweise ein duroplastischer Kleber zum Einsatz, dessen Hauptkomponente Phenolharz ist und ansonsten aus einem Thermoplast besteht. Die Mischung besteht dabei vorzugsweise aus 50 bis 80 Gew.% Phenolharz und 20 bis 50 Gew.% Thermoplast. Als Thermoplaste eignen sich beispielsweise Polyvinylazetat, Mischpolymerisate, Polyethylen, Polyester und so weiter, wobei der Thermoplast in dem Kleber den großen Vorteil mit sich bringt, das naturgemäß sehr brüchige Phenolharz elastischer zu machen.

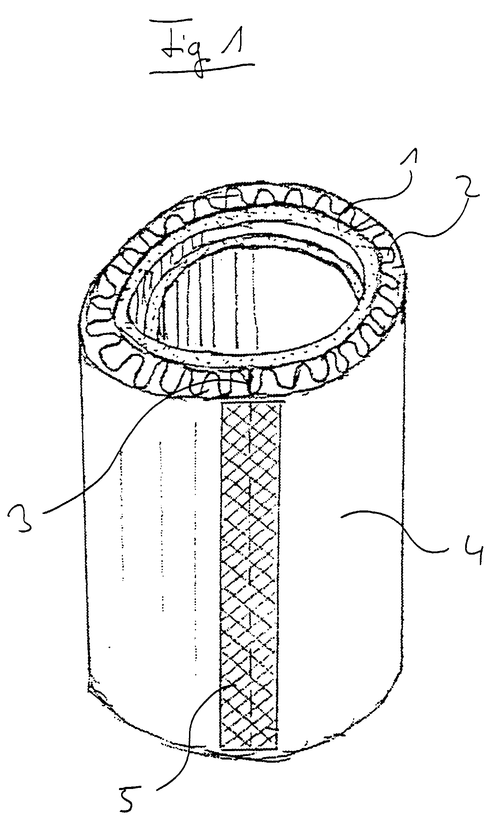

In der beigefügten Figur 1 ist ein Ausführungsbeispiel der vorliegenden Erfindung dargestellt.

Zu erkennen ist ein Schornsteininnenrohr 1, auf das ein Dämmelement 2 aus Mineralwolle in Form einer Spurplatte oder Lamellenmatte angeordnet ist. Wie zu erkennen ist, ist in dem dargestellten Ausführungsbeispiel das Dämmelement zwar in Form eines rohrschalenartigen Elementes ausgebildet, das nur eine Schnittstelle 3 mit einem entsprechenem Stoßbereich aufweist. Das Dämmelement 2 aus Mineralwolle ist darüberhinaus von einer Materialbahn 4 umgeben, bei der es sich im dargestellten Ausführungsbeispiel um ein Glasvlies handelt, welches auf das Dämmelement 2 aufkaschiert ist.

Der Verschluß des Dämmelementes 2 in Stoßbereich 3 erfolgt im dargestellten Ausführungsbeispiel durch ein Klebeband 5, das sich wie dargestellt über die gesamte Länge des Schnittes im Dämmelement 2 erstreckt. Im vorliegenden Ausführungsbeispiel handelt es sich bei dem Klebeband 5 um ein Glasgewebe, wobei ebenfalls eine Alufolie oder ein anderes geeignetes Material zum Einsatz kommen können.

Das Klebeband 5 ist im dargestellten Ausführungsbeispiel durch einen punktförmig aufgebrachten Kleber durch Aufbügeln auf der Materialbahn 4, welche das Dämmelement 2 umgibt , befestigt.

Als Kleber zur Befestigung des Klebebandes 5 kommt dabei im dargestellten Ausführungsbeispiel bevorzugt eine Mischung aus 60 % 100prozentigem Phenolharzpulver und 40 % Polyester-Polyurethandispersion zum Einsatz. Geeignet ist hierbei beispielsweise 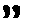 Emoldur" 40prozentig der Firma BASF. Beide Komponenten sind im dargestellten Ausführungsbeispiel mit einem pastenförmigem Kleber zusammengerührt, der über ein Lochblech punktförmig auf das Klebeband, hier den Glasgewebestreifen aufgebracht ist. Der Klebestreifen 5 ist darüber hinaus bei ca 200 °C aufgebügelt, wobei der Kleber schmilzt reagiert und irreversibel aushärtet.

## Patentansprüche

1. Dämmanschette aus Mineralwolle, insbesondere zur Umhüllung von in Schornsteinmantelsteine einsetzbare Schornsteininnenrohre (1), Heißdampfleitungen und ähnlichem, bestehend aus einer Dämmstoffschicht (2) und einer diese umgebenden Mantelschicht (4), wobei die Kombination aus Dämmstoffschicht (2) und Mantelschicht (4) zumindest eine Schnittstelle (3) mit Stoßkante aufweist, **dadurch gekennzeichnet, daß** die Schnittstelle (3) durch ein die Dämmanschette an ihren beiden Stoßkanten verbindendes Klebeband (5) verschlossen ist, das einen duroplastisch reagierenden Kleber aufweist.

2. Dämmanschette nach Anspruch 1, **dadurch gekennzeichnet, daß** der duroplastische Kleber punktförmig auf das Klebeband (5) aufgebracht ist.

3. Dämmanschette nach Anspruch 1 oder 2, **dadurch gekennzeichnet, daß** das Klebeband (5) durch Aufbügeln mit der Mantelschicht (4) verbunden ist.

4. Dämmanschette nach einem der vorhergehenden Ansprüche, **dadurch gekennzeichnet, daß** es sich bei dem Kleber zur Befestigung des Klebebandes (5) auf der Mantelschicht (4) im Stoßbereich (3) um eine Mischung aus Phenolharz und einem Thermoplast handelt.

5. Dämmanschette nach einem der vorhergehenden Ansprüche, **dadurch gekennzeichnet, daß** der Kleber aus 50 bis 80 Gew.% Phenolharz und 20 bis 50 Gew.% Thermoplast besteht.

6. Dämmanschette nach einem der vorhergehenden Ansprüche, **dadurch gekennzeichnet, daß** es sich bei der Dämmstoffschicht (2) um einen zu einem Rohr auf Stoß gebogenen Mineralwollefilz handelt und daß die Mantelschicht (4) aus einem auf die Dämmstoffschicht (2) aufkaschierten Glasvlies besteht.

7. Dämmanschette nach einem der vorhergehenden Ansprüche, **dadurch gekennzeichhet, daß** das Klebeband (5) aus einem Glasgewebestreifen gebildet ist.

8. Dämmanschette nach einem der vorhergehenden Ansprüche, **dadurch gekennzeichnet, daß** das Klebeband kontinuierlich sich über die gesamte Stoßlänge erstreckt oder in Abschnitten aufgebracht ist.
